Europäisches Patentamt

European Patent Office

Office européen des brevets

(19)

(11) Veröffentlichungsnummer: **0 199 142**
**B1**

(12) # EUROPÄISCHE PATENTSCHRIFT

(45) Veröffentlichungstag der Patentschrift:
04.07.90

(21) Anmeldenummer: 86104325.5

(22) Anmeldetag: 27.03.86

(51) Int. Cl.⁵: **B65D 47/34,** B05B 9/043,
B05B 11/00

(54) Handbetätigte Ausgabeeinrichtung für Medien.

(30) Priorität: 16.04.85 DE 3513575

(43) Veröffentlichungstag der Anmeldung:
29.10.86 Patentblatt 86/44

(45) Bekanntmachung des Hinweises auf die Patenterteilung:
04.07.90 Patentblatt 90/27

(84) Benannte Vertragsstaaten:
CH DE FR GB IT LI

(56) Entgegenhaltungen:
DE-A- 2 902 624
DE-B- 2 632 662
DE-B- 2 818 560

(73) Patentinhaber: Ing. Erich Pfeiffer GmbH & Co. KG,
Josef-Bosch-Strasse 4, D-7760 Radolfzell(DE)

(72) Erfinder: Skorka, Thomas, Josef-Bosch-Strasse 5,
D-7760 Radolfzell(DE)

(74) Vertreter: Patentanwälte Ruff und Beier,
Neckarstrasse 50, D-7000 Stuttgart 1(DE)

**Beschreibung**

Die Erfindung betrifft eine handbetätigte Ausgabeeinrichtung mit einer Pumpe für das Austragen von Medien aus einem Speichergefäß oder dgl. in Obenlage und demgegenüber umgekehrter Kopflage der Einrichtung.

Es ist eine Ausgabeeinrichtung dieser Art bekannt (DE-PS 28 18 560), bei welcher eine von einem Zylinder und einem in diesem verschiebbaren Pumpkolben begrenzte Pumpenkammer in Kopflage durch eine Öffnung in der Zylinderwandung befüllt wird, während sie in demgegenüber umgekehrter Obenlage unter Zwischenschaltung zweier Rückschlagventile durch einen am freien Ende des Zylinders vorgesehenen Ansaugschlauch zu befüllen ist. Die letztere Ansaugverbindung muß zur Erzielung eines ausreichend hohen Ansaugvakuums bei Kopflage während des Ansaughubes durch eines der Rückschlagventile geschlossen sein; andererseits muß diese Ansaugverbindung sowohl bei Kopflage als auch bei Obenlage während des Pumphubes geschlossen sein. Da diese Wirkungsweise eine sehr feine Abstimmung zahlreicher Faktoren, beispielsweise des Gewichtes von Ventilkugeln, von Strömungsquerschnitten und dgl. erfordert, ist insbesondere im Hinblick auf die meist sehr kleine Bauweise solcher Pumpen sowie die individuell unterschiedliche Handbetätigung ein zufriedenstellendes Arbeiten mit dieser Ausgabeeinrichtung in beiden Lagen nicht zu erreichen.

Der Erfindung liegt die Aufgabe zugrunde, eine Ausgabeeinrichtung der genannten Art zu schaffen, die bei einfacher Ausbildung in beiden Lagen im wesentlichen gleich gut arbeitet.

Diese Aufgabe wird bei einer Ausgabeeinrichtung der eingangs beschriebenen Art erfindungsgemäß dadurch gelöst, daß zwei Pumpen vorgesehen sind, von denen die eine zum Betrieb in der Obenlage und die andere in der Kopflage ausgebildet ist und daß beide Pumpen über Ansaugkanäle mit demselben Speichergefäß verbindbar sind und in denselben Auslaßkanal fördern. Erfindungsgemäß fördern die Pumpen unter gegenseitiger Umgehung in den Auslaßkanal. Da somit für jede Lage eine gesonderte Pumpe vorgesehen ist, ist eine gegenseitige Störung der jeweils ansaugenden und austragenden Pumpe durch die andere Pumpe vermieden, so daß ein wesentlich sicherer Betrieb der jeweils im Einsatz befindlichen Pumpe gewährleistet ist. Trotzdem können beide Pumpen, beispielsweise simultan, über eine einzige gemeinsame Handhabe, beispielsweise einen Austragkopf, betätigt werden, wobei eine kompakte Ausbildung ermöglicht wird.

Es ist denkbar, mindestens eine Pumpe als Balgpumpe oder nach einem anderen Pumpenprinzip auszubilden. Besonders zweckmäßig ist es jedoch, wenn die Einrichtung nach Art einer Schubkolbenpumpe einen Zylinder sowie eine in diesem verschiebbare Kolbeneinheit mit gesonderten Pumpkolben für die Begrenzung zweier gesonderter Pumpkammern der beiden Pumpen aufweist, so daß bei kompaktem Aufbau hohe Auslaßdrücke erzielt werden und beide Pumpen gleichartig ausgebildet werden können.

Die speicher- bzw. gefäßseitigen Mündungen der Ansaugkanäle können so vorgesehen sein, daß sie bei der der jeweiligen anderen Pumpe zugehörigen Lage der Einrichtung oberhalb des Medienspiegels und damit außerhalb des Mediums liegen und somit kein Medium ansaugen können, so daß also in der jeweiligen Lage der Einrichtung nur der Ansaugkanal der zugehörigen Pumpe Zugriff zum Medium hat. Statt dessen oder zusätzlich hierzu, ergibt sich eine vorteilhafte Weiterbildung des Erfindungsgegenstandes dadurch, daß eine Pumpe eingangsseitig unter Zwischenschaltung eines ersten Ansaugventiles an einen ersten Ansaugkanal für die Obenlage und die andere unter Zwischenschaltung eines zweiten Ansaugventiles für die Kopflage an einen zweiten Ansaugkanal angeschlossen ist, welch letzterer zweckmäßig zu dem den Zylinder umgebenden Kopfraum, also bei montierter Einrichtung zu demjenigen Raum führt, welcher um die Pumpe von dem Gefäß begrenzt ist. Durch solche Ansaugventile kann der Ansaugkanal der jeweils in der zugehörigen Lage austragenden Pumpe während des Pumphubes auf einfache Weise sicher verschlossen werden. Zur noch geringeren gegenseitigen Beeinflußung der beiden Pumpen münden beide Pumpen unter gegenseitiger Umgehung in den gemeinsamen Auslaßkanal.

Es ist zwar denkbar, die Pumpen parallel nebeneinander, konzentrisch ineinander oder in ähnlicher Weise anzuordnen, jedoch ist eine sehr schlanke Bauweise der Einrichtung bei sicherer Funktion und einfacher Montage vor allem dann möglich, wenn die Pumpen, insbesondere mit gleicher Achse hintereinander angeordnet sind. Beide Pumpkolben können in diesem Fall statt an gesonderten Kolbeneinheiten auch in einfacher Weise an einer gemeinsamen Kolbeneinheit vorgesehen sein, deren Aufbau noch weiter dadurch vereinfacht werden kann, daß beide Pumpkolben gegenüber dieser Kolbeneinheit in einer Hubrichtung lagefest und/oder mit festem Abstand zueinander vorgesehen sind, also einen fest mit der Kolbeneinheit verbundenen Bestandteil bilden und sich somit mit dieser Kolbeneinheit gleichsinnig bzw. gleichläufig bewegen. Um die Ansaugverbindungen zum Speichergefäß sehr einfach ausbilden zu können, liegt die jeweilige Pumpe in der zugehörigen Lage der Einrichtung unten.

Nach einem weiteren Merkmal der Erfindung ist die in Richtung des Pumphubes vordere Pumpe an ihrem hinteren Ende im wesentlichen ausschließlich durch den zugehörigen Pumpkolben gegenüber der anderen Pumpe abgedichtet, wobei bei lagefester Anordnung der Pumpkolben an der Kolbeneinheit, bei welcher der in Richtung des Pumphubes vordere Pumpkolben gegenüber dem anderen Pumpkolben nicht vorauseilt, die Pumpenkammer der zuletzt genannten Pumpe kleineren Kolbenquerschnitt aufweist, damit unter der Bedingung gleichen Hubes beider Pumpkolben in der hinteren Pumpenkammer ein ausreichend hoher Austragdruck erzeugt werden kann.

Eine besonders vorteilhafte Weiterbildung des Erfindungsgegenstandes besteht darin, daß das zweite Ansaugventil für die Kopflage durch ein nach Art einer Schiebersteuerung in Abhängigkeit von der Kolbenlage des zugehörigen Pumpkolbens gesteuertes Ventil gebildet ist, das vorzugsweise durch eine in der Kolbenlaufbahn liegende Verbindungsöffnung des den Zylindermantel der zweiten Pumpenkammer durchsetzenden zweiten Ansaugkanales und den zweiten Pumpkolben gebildet ist, der die Verbindungsöffnung gegen Ende seines Rückhubes zur zweiten Pumpenkammer freigibt. Dadurch kann der zweite Ansaugkanal lediglich durch einen oder mehrere Durchbrüche im Zylindermantel gebildet sein, die nach einem ersten Teilweg des Pumpkolbens auf seinem Pumphub zwangsgesteuert geschlossen sind.

Bei zahlreichen Anwendungen der erfindungsgemäßen Einrichtung, beispielsweise bei Anwendung als Zerstäuberpumpe, aber auch als Dosierpumpe oder dgl., ist es vorteilhaft, den Auslaßkanal bzw. den Ausgang der jeweiligen Pumpe während des Pumphubes erst dann zu öffnen, wenn das Medium in der zugehörigen Pumpenkammer einen vorbestimmten Druck erreicht hat, damit es dann schlagartig ausgebracht wird. Zu diesem Zweck ist im Auslaßkanal bzw. in der Austragverbindung zwischen mindestens einer Pumpe und dem Auslaßkanal ein Auslaßventil, insbesondere ein elastisch geschlossenes Überdruckventil angeordnet. Bei einer sehr einfachen Ausführungsform kann jeder Pumpe ein gesondertes Auslaßventil zugeordnet werden, wenn die Kolbeneinheit von der Pumpenkammer für die Obenlage bis zu einer Auslaßöffnung von einem Innenkanal durchsetzt ist, in dem zwei Auslaßventile, nämlich je eines für jede der beiden Pumpen hintereinander untergebracht werden können.

Gemäß der Erfindung wird des weiteren ein vorzugsweise als Auslaßventil vorgesehenes Durchlaßventil vorgeschlagen, das insbesondere auch bei der erfindungsgemäßen Einrichtung als Überdruckventil geeignet ist und einen wenigstens in einer Stellung annähernd gewölbten, selbstfedernden Ventilkörper aufweist, der mit einem vorzugsweise ringförmigen Ventilsitz zusammenarbeitet und in dem den Ventilsitz umgebenden Bereich einem das Ventil öffnenden Mediendruck ausgesetzt ist. Dieser Ventilkörper kann innerhalb des Ventilsitzes eine beispielsweise stets offene Durchlaßöffnung aufweisen und somit Bestandteil eines durch dieses Ventil durchgehenden Kanales sein, an welchen ein weiterer Kanal unter Zwischenschaltung des genannten Ventiles angeschlossen ist.

Im Falle der erfindungsgemäßen Einrichtung ist die Anordnung dabei zweckmäßig so vorgesehen, daß der Innenkanal über mindestens einen Seitenkanal an die Pumpenkammer für die Kopflage angeschlossen ist und daß in der Verbindung zwischen diesem Seitenkanal und dem Innenkanal ein in der beschriebenen Weise ausgebildetes Auslaßventil angeordnet ist, dessen Ventilkörper vom Innenkanal durchsetzt ist, also einen Abschnitt des Innenkanales bildet. Das Auslaßventil weist zweckmäßig einen ringförmig an dem Ventilsitz etwa axial federnd anliegenden und den Innenkanal gegenüber dem ihn umgebenden Seitenkanal abtrennenden Ventilkörper auf, der insbesondere als etwa kugelkalottenförmiger Hohlkörper ausgebildet ist. Dieser Ventilkörper kann als gesonderter Bauteil eingesetzt oder in baulich sehr einfacher Weise einteilig mit einer den zugehörigen Abschnitt des Innenkanales bildenden Kolbenstange ausgebildet sein.

Ein Auslaßventil, insbesondere das Auslaßventil für die Obenlage ist nach einem weiteren Vorschlag gemäß der Erfindung durch ein Schlauchventil gebildet, dessen elastisch aufweitbarer, beispielsweise einen kugelförmigen Ventilkörper umschließender Schlauchmantel vorzugsweise durch einen Längsabschnitt des Mantels der Kolbenstange des zugehörigen ersten Pumpkolbens gebildet ist. Der Ventilkörper des Auslaßventiles für die Kopflage kann also einteilig mit dem Schlauchmantel des Auslaßventiles für die Obenlage ausgebildet sein, wobei diese beiden Ventilteile ihrerseits wiederum einteilig mit dem zugehörigen Abschnitt der Kolbenstange und/oder dem zugehörigen Pumpkolben ausgebildet sein können.

Zur einfachen Verbindung der beiden Pumpkolben miteinander ist die Kolbenstange des Pumpkolbens für die Oberlage in eine vom Seitenkanal durchsetzte Endmuffe der Kolbenstange des Pumpkolbens für die Kopflage eingesetzt, welche den Ventilkörper des Auslaßventiles für die Kopflage mit Ringabstand umgibt und vorzugsweise im Bereich des zugehörigen Ventilsitzes in den gemeinsamen Auslaßkanal übergeht.

Derjenige Gehäuseraum, der auf derjenigen Seite des zugehörigen Pumpkolbens liegt, auf welcher die Kolbenstange zum Zwecke der Betätigung nach außen geführt ist, wird zweckmäßig durch einen zylindermantelförmigen Spalt zwischen der Kolbenstange und dem Pumpengehäuse entlüftet. Zweckmäßig ist dabei an der Kolbeneinheit ein Sperrglied vorgesehen, welches am Ende des Pumphubes diesen Spalt, vorzugsweise an seinem äußeren Ende, verschließt, so daß selbst in der Kopflage kein Leckmedium austreten kann.

Diese und weitere Merkmale von bevorzugten Weiterbildungen der Erfindung gehen auch aus der Beschreibung und den Zeichnungen hervor. Ausführungsbeispiele der Erfindung sind in den Zeichnungen dargestellt und werden im folgenden näher erläutert. In den Zeichnungen zeigen:

Fig. 1 eine erfindungsgemäße Einrichtung im Axialschnitt und in Ausgangslage,

Fig. 2 die Einrichtung gemäß Figur 1 in vergrößerter Darstellung und am Ende des Pumphubes,

Fig. 3 und 4 die Einrichtung in Darstellungen gemäß den Figuren 1 und 2, jedoch in Kopflage,

Fig. 5 und 6 eine weitere Ausführungsform in Darstellungen entsprechend den Figuren 1 und 2,

Fig. 7 ein Schnitt nach der Linie VII/VII in Figur 5,

Fig. 8 und 9 die Einrichtung in Darstellungen gemäß den Figuren 5 und 6, jedoch in Kopflage,

Fig. 10 ein Schnitt nach der Linie X/X in Figur 8,

Fig. 11 ein Ausschnitt einer weiteren Ausführungsform einer erfindungsgemäßen Einrichtung im Axialschnitt.

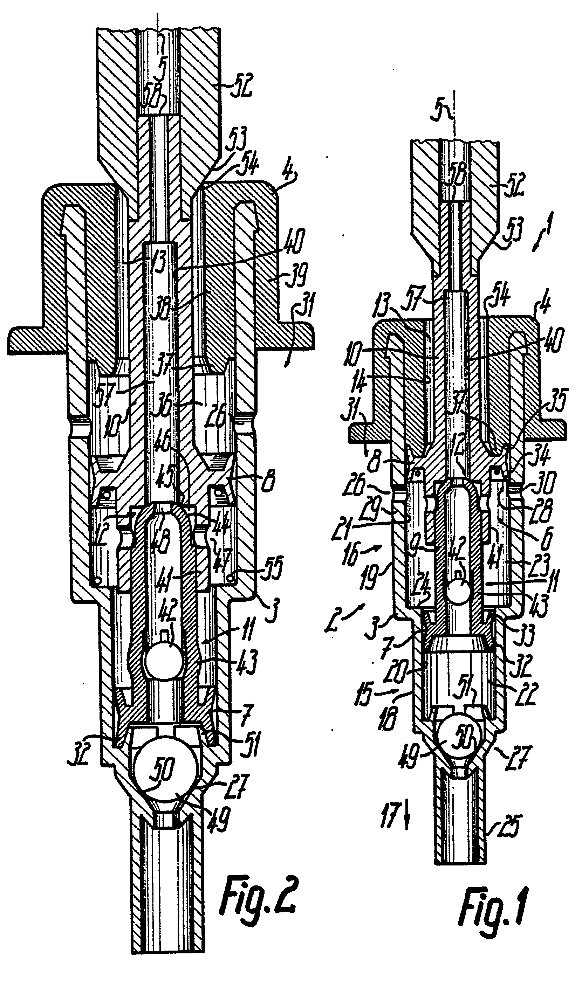

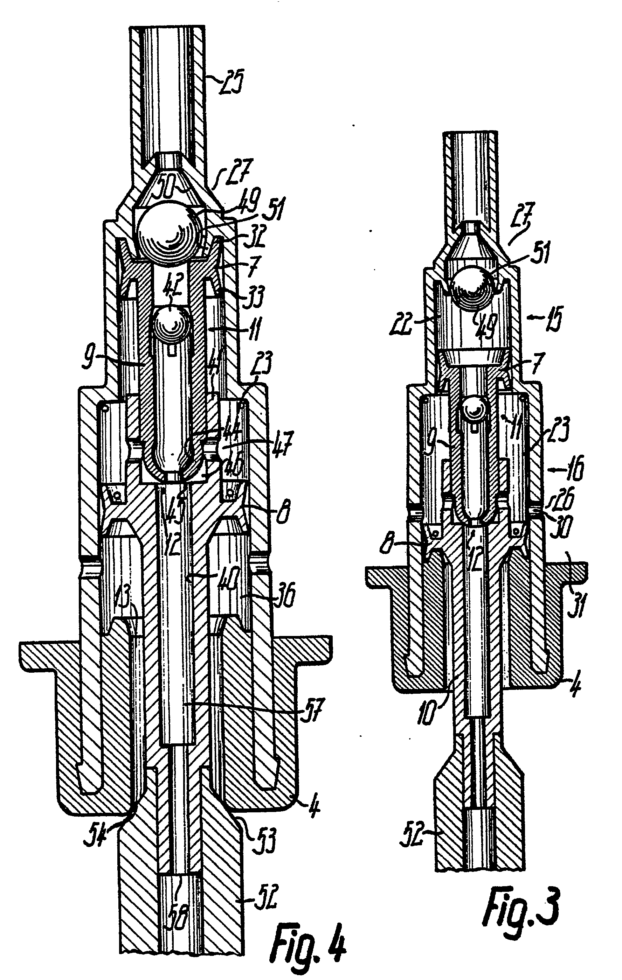

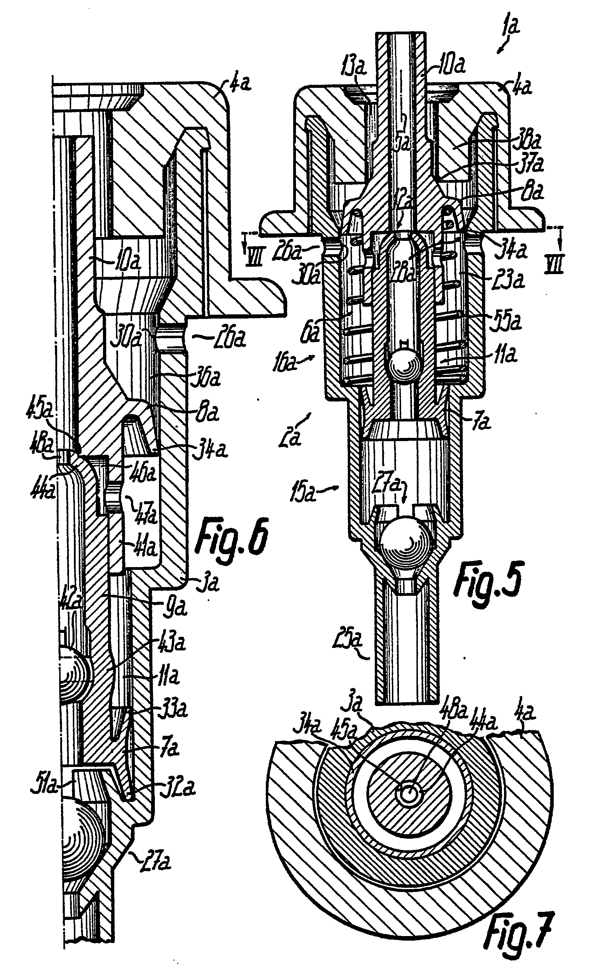

Wie die Figuren 1 bis 4 zeigen, weist eine erfindungsgemäße handbetätigte Ausgabeeinrichtung 1 ein im wesentlichen zweiteiliges Pumpengehäuse 2 aus einem Zylindergehäuse 3 und einem Zylinderdeckel 4 auf, welcher auf das äußere weitere Ende des Zylindergehäuses 3 aufgesetzt ist und ebenso wie dieses in der Pumpenachse 5 liegt. In dem Pumpengehäuse 2 ist eine in der Pumpenachse 5 linear verschiebbare Kolbeneinheit 6 mit zwei Pumpkolben 7,8, zwei Kolbenstangen 9,10 und zwei Auslaßventilen 11,12 angeordnet, von der eine Kolbenstange 10 zur Betätigung der Pumpe unter Freilassung eines ringspaltförmigen Entlüftungskanales 13 durch eine Durchführungsöffnung 14 des Zylinderdeckels 4 aus dem Pumpengehäuse 2 herausgeführt ist. Die Ausgabeeinrichtung 1 bildet zwei in Richtung der Pumpenachse 5 im wesentlichen hintereinander liegende gesonderte Schubkolben-Pumpen 15,16, von denen die in Richtung Pfeil 17 des Pumphubes vordere, am inneren Ende des Pumpengehäuses 2 liegende Pumpe 15 für die in den Figuren 1 und 2 dargestellte Obenlage und die dahinter bzw. benachbart zum Zylinderdeckel 4 liegende Pumpe 16 für die Kopflage gemäß den Figuren 3 und 4 ausgebildet ist. Das Zylindergehäuse 3 bildet für die Pumpe 15 einen Zylinder 18 und an diesen unmittelbar anschließend für die Pumpe 16 einen Zylinder 19, wobei der Zylinder 18 eine Kolbenlaufbahn 20 für den Pumpkolben 7 und der Zylinder 19 eine Kolbenlaufbahn 21 für den Pumpkolben 8 bildet. Der Zylinder 18 begrenzt mit dem zugehörigen Pumpkolben 7 eine Pumpkammer 22, während der Zylinder 19 eine sich mit zunehmendem Pumphub in den Zylinder 18 ausdehnende Pumpkammer 23 mit beiden Pumpkolben 7,8 begrenzt. Zur Erzielung eines gegenüber dem Pumpkolben 7 größeren wirksamen Kolbenquerschnittes des Pumpkolbens 8 ist die lichte Weite des Zylinders 19 größer als diejenige des Zylinders 18, wobei die beiden Zylinder bzw. Kolbenlaufbahnen 20,21 über eine Ringschulter 24 ineinander übergehen.

Die Pumpe 15 weist einen in der Pumpenachse 5 liegenden Ansaugkanal 25 auf, der über ein als Rückschlagventil ausgebildetes Ansaugventil 27 mit dem dem Pumpkolben 7 gegenüberliegenden Ende der Pumpenkammer 22 verbunden und beispielsweise durch einen im Durchmesser gegenüber dem Zylinder 18 reduzierten Endstutzen des Zylindergehäuses 3 gebildet ist, in welchen ein nicht näher dargestelltes, wenigstens annähernd bis zum Boden des mit der Ausgabeeinrichtung 1 zu entleerenden Gefäßes reichendes Steigrohr, beispielsweise ein Saugschlauch zu stecken ist. Das Ansaugventil 27, dessen Ventilgehäuse einteilig mit dem Zylindergehäuse 3 ausgebildet ist, liegt in der Pumpenachse 5 am Übergang zwischen dem Zylinder 18 und dem Endstutzen. Für die Pumpe 16 ist ein Ansaugkanal 26 vorgesehen, der durch einen oder mehrere um die Achse 5 verteilte Durchbrüche im Zylindermantel 29 des Zylinders 19 gebildet und durch ein in Abhängigkeit von der Hublage des Pumpkolbens 8 schiebergesteuertes Ansaugventil 28 zu schließen bzw. zu öffnen ist. Die Durchbrüche des Ansaugkanales 26 bilden in der Kolbenlaufbahn 21 Verbindungsöffnungen, welche bei Ausgangslage des Pumpkolbens 8 nahe benachbart zu dessen in Richtung Pfeil 17 des Pumphubes vorderen Ende liegen und auf der ersten Teilstrecke des Pumphubes des Pumpkolbens 8 von diesem durch Überfahren zur Pumpenkammer 23 versperrt werden, so daß der Ansaugkanal 26 geschlossen ist. An der Außenseite des Zylindergehäuses 3 münden die Durchbrüche des Ansaugkanales 26 in den Kopfraum 31, welcher zwischen dem in das Gefäß ragenden Zylindergehäuse 3 und der dieses umgebenden Wandung des Gefäßes liegt, welche auch die Gefäßöffnung begrenzt, an deren Begrenzung die Ausgabeeinrichtung 1 mit einem vorstehenden Flanschrand des Zylinderdeckels 4 abgedichtet befestigt ist, derart, daß die Belüftung des Gefäßes im wesentlichen ausschließlich über das Pumpengehäuse 2 erfolgen kann. In Kopflage der Ausgabeeinrichtung 1 und damit des mit dieser bestückten Gefäßes ist der Kopfraum 31 durch Schwerkraft mit dem auszutragenden Medium gefüllt, von welchem somit die im Kopfraum 31 liegenden Mündungen des Ansaugkanales 26 umspült sind.

Der jeweilige Pumpkolben 7 bzw. 8 weist jeweils zwei im Axialschnitt entgegengesetzt gerichtet ausragende, ringförmige Kolbenlippen 32,33 bzw. 34,35 auf, die zu ihren an der jeweils zugehörigen Kolbenlaufbahn 20,21 geführten Endkanten hin jeweils spitzwinklig kegelstumpfförmig erweitert sind; unter Überdruck in der Pumpenkammer 22 verstärkt sich somit der Anlagedruck der vorderen Kolbenlippe 32 des Pumpkolbens 7, während bei Überdruck in der Pumpenkammer 23 selbsttätig der Anlagedruck der hinteren Kolbenlippe 33 des Pumpkolbens 7 und der vorderen Kolbenlippe 34 des Pumpkolbens 8 verstärkt wird. Die hintere Kolbenlippe 35 des Pumpkolbens 8 verschließt beim Rückhub der Kolbeneinheit 6 durch Überfahren der Verbindungsöffnungen 30 diese zunächst gegenüber dem zwischen dem Pumpkolben 8 und dem Zylinderdeckel 4 liegenden Raum 36 des Pumpengehäuses 2, welcher zum Be- bzw. Entlüftungskanal 13 offen ist und daher nach Öffnung des Ansaugkanales 26 zum Raum 36 hin mit dem Ansaugkanal einen Teil der Luftausgleichsverbindung zwischen dem Gefäßinnern und der Außenatmosphäre darstellt. Nachdem der Pumpkolben 8 mit der hinteren Kolbenlippe 35 die Verbindungsöffnungen 30 geschlossen hat, muß er noch um einen dem Abstand zwischen den Laufkanten der Kolbenlippen 34,35 entsprechenden Weg zurückfahren, bis der Ansaugkanal 26 durch Freigabe der Verbindungsöffnungen 30 zur Pumpenkammer 23 geöffnet ist. Am Ende des Rückhubes bzw. in der Ausgangslage greift die hintere Kolbenlippe 35 des Pumpkolbens 8 in eine an ihren Querschnitt angepasste Ringnut des Pumpengehäuses 2 ein, derart, daß das innere Ende des ringspaltförmigen Belüftungskanales 13 dicht verschlossen ist. Das innere Ende einer in das äußere offene Ende des Zylindergehäuses 3 eingreifenden Innenmuffe 38 des Zylinderdeckels 4 weist zu diesem Zweck an seiner Stirnseite einen Ringvorsprung 37 auf, der die Kolbenstange 10 umgibt und im Querschnitt an den vertieften Querschnitt der hinteren Stirnfläche des Kolbens 8 angepaßt ist, derart, ·daß er bei Ausgangslage der Kolbeneinheit 6 abdichtend in diese vertiefte Stirnfläche eingreift und nach Art eines Anschlages die Ausgangslage der Kolbeneinheit 6 festlegt. Außer der Innenmuffe 38 weist der Zylinderdeckel 4 eine etwa gleich lange, am Außenumfang des Zylindergehäuses 3 anliegende Außenmuffe 39 mit dem Flanschrand zur Befestigung der Ausgabeeinrichtung 1 am Gefäß auf, derart, daß das äußere Ende des Zylindergehäuses 3 vollständig versenkt bzw. eingebettet innerhalb des Zylinderdeckels 4 liegt.

Die beiden Kolbenstangen 9,10, die auch einteilig ausgebildet sein können, begrenzen einen von der vorderen Stirnfläche des Pumpkolbens 7 bis zum äußeren Ende der Kolbenstange 10 bzw. der Kolbeneinheit 6 durchgehenden Innenkanal 40, der in der Pumpenachse 5 liegt. Die Kolbenstange 10 weist eine die vordere Stirnfläche des Pumpenkolbens 8 überragende, in der Pumpenkammer 23 liegende, hülsenförmige Endmuffe 41 auf, in welche das vom Pumpkolben 7 abgekehrte Ende der Kolbenstange 9 eingesteckt und lagefest gehalten ist. Hinter der hinteren Kolbenlippe 33 des Pumpkolbens 7 ist in der Kolbenstange 9 das Auslaßventil 11 in Form eines Schlauchventiles vorgesehen, das beispielsweise gemäß der DE-OS 29 02 624 ausgebildet sein kann. Das Auslaßventil 11, das hinter der hinteren Kolbenlippe 33 des Pumpkolbens 7 angeordnet ist, weist einen durch eine Kugel gebildeten Ventilkörper 42 auf, der im zugehörigen Abschnitt des Innenkanales 40 liegt und durch Anlage an dessen Innenfläche den Innenkanal 40 mediendicht verschließt. Der Ventilkörper 42 ist von einem elastisch aufweitbaren und selbstfedernd rückstellenden Schlauchmantel 43 umgeben, der den zugehörigen Abschnitt des Innenkanales 40 sowie der Kolbenstange 9 bildet, nämlich im dargestellten Ausführungsbeispiel einteilig mit der rohrförmigen Kolbenstange 9 ausgebildet ist. Erreicht der Druck in der Pumpenkammer 22 den Öffnungsdruck des Auslaßventiles 11, so wird der Schlauchmantel 43 gemäß Figur 2 derart aufgeweitet, daß das Medium aus der Pumpenkammer 22 durch den Ringspalt zwischen dem Ventilkörper 42 und dem aufgeweiteten Schlauchmantel 43 nach außen strömen kann; da der Überdruck in der Pumpenkammer 22 gleichzeitig über den Pumpkolben 7 stauchend auf den Schlauchmantel 43 wirkt, wird über den Kolben die Öffnung des Auslaßventiles 11 unterstützt, so daß nach Art einer Hysteresewirkung der Öffnungsdruck des Auslaßventiles 11 höher als dessen Schließdruck liegt. Dadurch ergibt sich ein gleichförmiger Austrag aus der Pumpenkammer 22.

Das Auslaßventil 12, das im Bereich der vorderen Stirnfläche des Pumpkolbens 8 liegt und für den Austrag aus der Pumpenkammer 23 vorgesehen ist, weist einen hohlkugelkalottenförmigen, in der Ventilachse bzw. der Pumpenachse 5 liegenden Ventilkörper 44 auf, dessen durch seine Wölbungsaußenseite gebildeter Schließfläche ein ringförmiger Ventilsitz 45 zugeordnet ist, der zweckmäßig in derselben Achse liegt. Der gewölbte Abschnitt des Ventilkörpers 44 kann an seinem vom Ventilsitz 45 abgekehrten weiteren Ende in einen zylinderhülsenförmigen Abschnitt übergehen, dessen Außendurchmesser gegenüber dem ihn umgebenden Innendurchmesser der ein Ventilgehäuse bildenden Endmuffe 41 kleiner ist, so daß der Ventilkörper 44 einlaßseitig vom Ventilsitz 45 von einem Ringraum 46 umgeben ist. Dieser Ringraum 46, der auslaßseitig durch den am Ventilsitz 45 anliegenden Ventilkörper 44 geschlossen ist, bildet Teil eines Seitenkanales 47, welcher die Einlaßseite des Auslaßventiles 12 mit der Pumpenkammer 23 verbindet und um die Pumpenachse 5 verteilte Durchbrüche im Mantel der Endmuffe 41 aufweist, die den Ringraum 46 mit der Pumpenkammer 23 verbinden.

Bei Erreichen des Öffnungsdruckes des Auslaßventiles 12 in der Pumpenkammer 23 wird der Ventilkörper 44 gemäß Figur 4 unter elastischer Stauchung durch das im Ringraum 46 unter Druck stehende Medium vom Ventilsitz 45 abgehoben, wodurch das Medium aus der Pumpenkammer 23 durch das so geöffnete Auslaßventil 12 in den nach außen führenden Teil des Innenkanales 40 strömen kann. Durch die beschriebene Ausbildung des Ventilkörpers 44 weist dieser eine Federcharakteristik derart auf, daß seine selbstfedernde Rückstellkraft mit zunehmendem Öffnungsweg zunächst geringer wird, so daß der Austrag aus der Pumpenkammer 23 mit einer einzigen Ventilöffnung in einem Durchgang erfolgen kann. Der Ventilkörper 44 ist einteilig mit der Kolbenstange 9 ausgebildet und bildet deren freies Ende. Des weiteren ist der Ventilkörper 44 in Schließlage mit radialem Abstand innerhalb des Ventilsitzes 45 vom Innenkanal 40 durchsetzt, wozu in der Kuppe des Ventilkörpers 44 ein in der Pumpenachse 5 liegender, beispielsweise zylindrischer Durchbruch 48 vorgesehen ist, der das innere der Kolbenstange 9 bei Schließlage des Auslaßventiles 12 mit dem übrigen Innenkanal 40 verbindet. Bei Austrag aus der Pumpenkammer 22 kann somit das Medium ungehindert das Auslaßventil 12 passieren, wobei das den Ventilkörper 44 nach außen durchströmende Medium zu einer Verstärkung der Schließkraft des Auslaßventiles 12 führen kann. Ab dem Auslaßventil bildet der Innenkanal den gemeinsamen Auslaßkanal 57 für beide Pumpen 15, 16, dessen Auslaßöffnung 58 am äusseren Ende der Kolbeneinheit liegt.

Das Ansaugventil 27 ist als Rückschlagventil ausgebildet, das als Ventilkörper eine Kugel und einen durch einen Innenkonus gebildeten Ventilsitz 50 aufweist, der zum Ansaugkanal 25 hin verengt ist. An der vom Ventilsitz 50 abgekehrten Seite sind in Form eines für das Medium durchlässigen Käfigs 51 Anschläge für den Ventilkörper 49 vorgesehen, an welchen dieser in Öffnungslage des Ansaugventiles 27 gemäß Figur 3 anliegt. Der unterbrochen ringförmige Käfig 51 ist im Querschnitt so ausgebildet, daß er am Ende des Pumphubes im wesentlichen vollständig innerhalb der vertieften vorderen Stirnfläche des Pumpkolbens 7 liegt bzw. derart in die vordere Kolbenlippe 32 eingreift, daß er an deren kegelstumpfförmigen Innenmantelfläche anliegt.

An dem außerhalb des Pumpengehäuses 2 liegenden Abschnitt der Kolbeneinheit 6 bzw. der Kolbenstange 10 ist ein Sperrglied 52 für die Durchführungsöffnung 14 bzw. den Belüftungskanal 13 vorgesehen, das einen zum Pumpengehäuse 2 spitzwinklig kegelstumpfförmig verjüngten Sperrkonus 53 aufweist, der am Ende des Pumphubes gemäß den Figuren 2 und 4 derart an der äußeren Ringbegrenzung 54 der Durchführungsöffnung 14 des Zylinderdeckels 4 schließend anliegt, daß das zugehörige Ende des Belüftungskanales 13 dicht verschlossen ist. Das Sperrglied 52 kann hülsenförmig auf das äußere Ende der Kolbenstange 10 aufgesteckt und Bestandteil eines Austragkopfes zur Betätigung der Ausgabeeinrichtung 1 sein. Die Ringbegrenzung 54 ist im Querschnitt zweckmäßig abgerundet.

Die beschriebene Pumpe arbeitet nach folgendem Verfahren: In Obenlage gemäß den Figuren 1 und 2, in welcher die Ausgabeeinrichtung 1 an der Oberseite des zu entleerenden Gefäßes beispielsweise mit annähernd vertikaler Pumpenachse 5 liegt, wird beim Rückhub der Kolbeneinheit 6 unter Öffnung des Ansaugventiles 27 Medium aus dem Bodenbereich des Gefäßes in die Pumpenkammer 22 angesaugt. Der Ansaugkanal 26 ist in diesem Fall nicht von Medium umspült, weshalb auch die Pumpenkammer 23 nicht mit Medium gefüllt wird. Beim darauffolgenden Pumphub schließt das Ansaugventil 27 und nach Erreichen des Öffnungsdruckes öffnet das Auslaßventil 11, so daß das Medium aus der Pumpenkammer 22 durch den Durchbruch 48 und den Innenkanal 40 nach außen ausgetragen wird. In der Kopflage gemäß den Figuren 3 und 4, in welcher die Ausgabeeinrichtung 1 beispielsweise mit aufrechter bzw. annähernd vertikaler Pumpenachse 5 an der Unterseite des Gefäßes liegt, wird beim Rückhub in der Pumpenkammer 23 ein Unterdruck aufgebaut, der nach Überfahren der Verbindungsöffnungen 30 durch den Pumpkolben 8 zum Ansaugen von Medium durch den Ansaugkanal 26 in die Pumpenkammer 23 führt. Beim darauffolgenden Pumphub wird bei Erreichen des Öffnungsdruckes des Auslaßventiles 12 das Medium aus der Pumpenkammer 23 durch den Seitenkanal 47, das Auslaßventil 12 sowie den Innenkanal 40 ausgetragen. Hierbei befindet sich der Ventilkörper 49 des Ansaugventiles 27 durch den Schwerkraft in Öffnungslage, in welcher er durch den Käfig 51 gehalten wird. Eventuell in der Pumpenkammer 22 befindliches Medium bzw. befindliche Luft können dadurch vom Pumpkolben 7 durch den Ansaugkanal 25 zurück in das Gefäß gedrückt werden, weshalb in diesem Fall das Ansaugventil 27 mit dem Ansaugkanal 25 einen Entlüftungskanal für die Pumpe 15 bildet. Unabhängig von der Lage der Ausgabeeinrichtung 1 kann nach der Anfangsphase des Pumphubes, das heißt nach Überlaufen der Verbindungsöffnungen 30 durch den Pumpkolben 8 in der beschriebenen Weise der Luftausgleich zum Innern des Gefäßes erfolgen. Der Rückhub der Kolbeneinheit 6 erfolgt unter der Kraft einer Rückstellfeder 55, die im dargestellten Ausführungsbeispiel innerhalb der Pumpenkammer 23 in Form beispielsweise einer die Kolbenstange 9 und die Endmuffe 41 umgebenden Schraubendruckfeder angeordnet ist, welche sich mit einem Ende in der vorderen, vertieften Stirnfläche des Pumpkolbens 8 und mit dem anderen Ende an der Ringschulter 24 abstützt, nahe zu welcher das hintere Kolbenende des Pumpkolbens 7 in der Ausgangslage liegt.

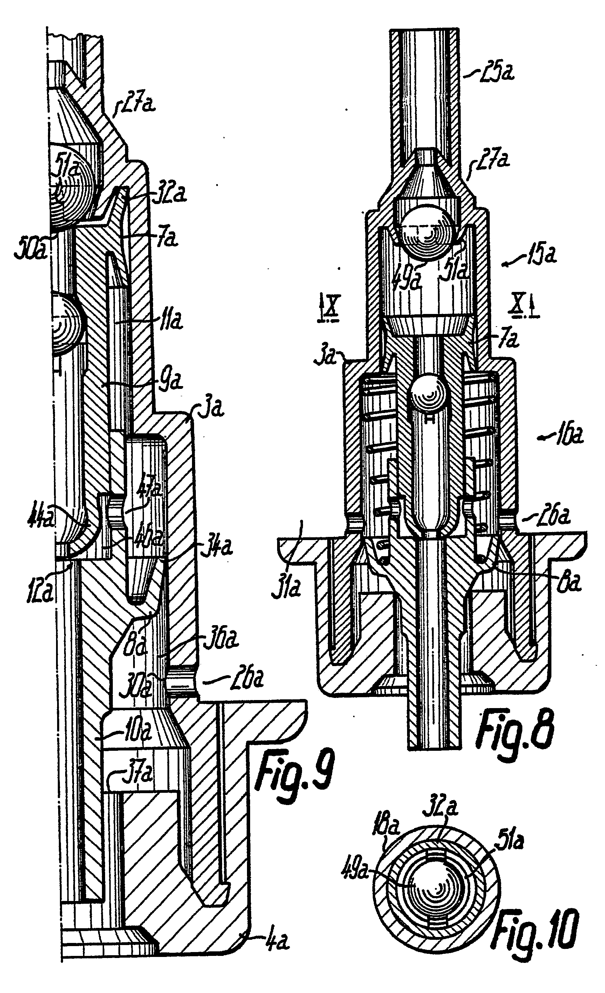

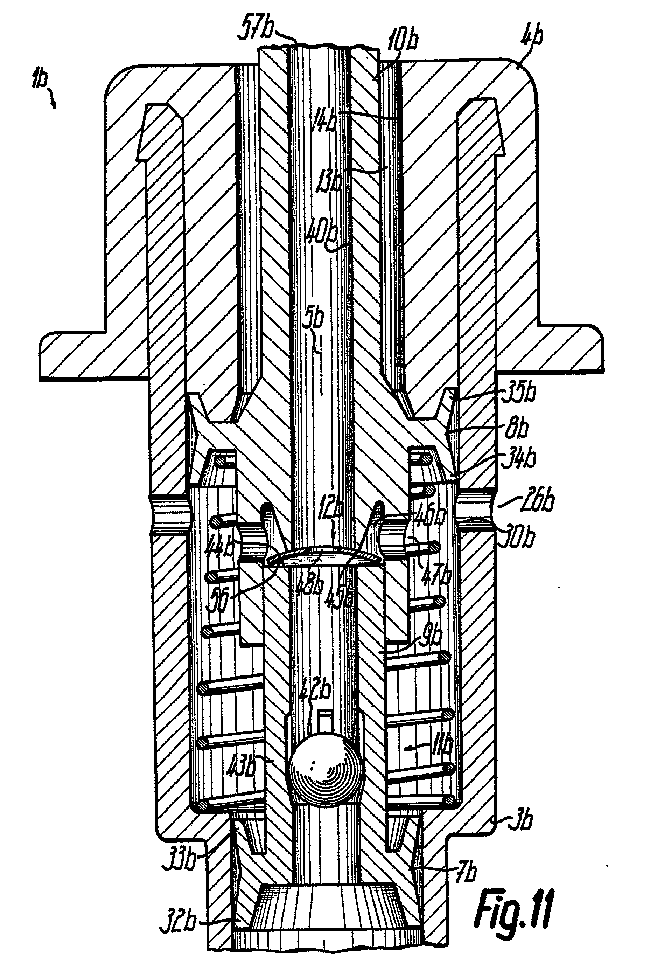

In den Figuren 5 bis 11 sind für einander entsprechende Teile die gleichen Bezugszeichen wie in den Figuren 1 bis 4, jedoch in den Figuren 5 bis 10 mit dem Index "a" und in Figur 11 mit dem Index "b" verwendet. Bei der Ausführungsform nach den Figuren 5 bis 10 weist der Pumpkolben 8a der Pumpe 16a nur eine Kolbenlippe, nämlich die vordere Kolbenlippe 34a auf. Dadurch sind die Verbindungsöffnungen 30a des Ansaugkanales 26a am Anfang des Pumphubes bereits nach Überfahren durch die Dichtlippe 34a zum hinter dem Pumpkolben 8a liegenden Raum 36a des Pumpengehäuses 2a freigegeben. Beim Rückhub werden diese Verbindungsöffnungen 30a gleichzeitig mit deren Freigabe gegenüber der Pumpenkammer 23a zum Raum 36a hin geschlossen. An das hintere Ende des Pumpkolbens 8a schließt sich ein nach außen verjüngter, kegelstumpfförmiger Ansatz der Kolbenstange 10a an, der bei Ausgangslage der Kolbeneinheit 6a unter dem Druck der Rückstellfeder 55a abgedichtet an der inneren Ringbegrenzungskante 37a der Innenmuffe 38a des Zylinderdeckels 4a anliegt.

Bei der Ausführungsform nach Figur 11 ist der Ventilkörper 44b des Auslaßventiles 12b durch einen federtellerförmigen gesonderten Bauteil aus Kunststoff, Stahl oder dgl. gebildet, der in Schließlage des Ventiles axial zwischen einer Stirnfläche 56 und dem Ventilsitz 45b selbstfedernd verspannt ist. Mit seiner konkaven Krümmungsseite liegt dabei der ringförmige Federteller im Bereich seines Außenumfanges an der als Stützfläche vorgesehenen Stirnfläche 56 ringförmig abgedichtet an, während seine Anlage am Ventilsitz 45b auf einem demgegenüber kleineren, jedoch gegenüber dem Durchbruch 48b größeren Durchmesser erfolgt. Es ist auch denkbar, daß der Ventilkörper 44b in der Schließlage nicht gewölbt, sondern annähernd eben ist und in der Öffnungsstellung eine gewölbte Form einnimmt; der Ventilkörper 44b ist zwischen der ringförmigen Stirnfläche 56 und dem Ventilsitz 45b axial vorgespannt. An seiner konvexen Krümmungsseite ist der Ventilkörper 44b im Anschluß an den Außenumfang des Ventilsitzes 45b von dem Ringraum 46b umgeben, welcher einen Bestandteil des Seitenkanales 47b bildet. Der Außendurchmesser des Ventilkörpers 44b ist nur geringfügig kleiner als der Innendurchmesser des Ringraumes 46b, so daß der Ventilkörper 44b eine genau ausgerichtete Lage beibehält und trotzdem ungehindert seine federnde Öffnungsbewegung ausführen kann.

**Patentansprüche**

1. Handbetätigte Ausgabeeinrichtung mit einer Pumpe für das Austragen von Medien aus einem Speichergefäß oder dgl. in Oberlage und demgegenüber umgekehrter Kopflage der Einrichtung, dadurch gekennzeichnet, daß zwei Pumpen (15, 16) vorgesehen sind, von denen die eine zum Betrieb in der Oberlage und die andere in der Kopflage ausgebildet ist und daß beide Pumpen (15, 16) über Ansaugkanäle (25, 26) mit demselben Speichergefäß verbindbar sind sowie in denselben Auslaßkanal (57), jedoch unter gegenseitiger Umgehung, fördern.

2. Einrichtung nach Anspruch 1, dadurch gekennzeichnet, daß sie nach Art einer Schubkolbenpumpe einen Zylinder (18, 19) sowie eine in diesem verschiebbare Kolbeneinheit (6) mit gesonderten Pumpkolben (7, 8) für die Begrenzung zweier gesonder-

ter Pumpenkammern (22, 23) der beiden Pumpen (15, 16) aufweist, von denen eine eingangsseitig an einen ersten Ansaugkanal (25) für die Obenlage und die andere für die Kopflage an einen zweiten, zu dem Zylinder (18, 19) umgebenden Kopfraum (31) führenden Ansaugkanal (26) angeschlossen ist.

3. Einrichtung nach Anspruch 1 oder 2, dadurch gekennzeichnet, daß die Pumpen (15, 16), insbesondere mit gleicher Achse (5), hintereinander angeordnet sind und daß vorzugsweise beide Pumpkolben (7, 8) an einer gemeinsamen Kolbeneinheit (6) sowie gegenüber dieser in einer Hubrichtung (Pfeil 17) lagefest mit festem Abstand zueinander vorgesehen sind.

4. Einrichtung nach einem der vorhergehenden Ansprüche, dadurch gekennzeichnet, daß die jeweilige Pumpenkammer (22, 23) in der zugehörigen Lage der Ausgabeeinrichtung (1) unten liegt und daß vorzugsweise die in Richtung (Pfeil 17) des Pumphubes vordere Pumpe (15) an ihrem hinteren Ende ausschließlich durch den zugehörigen Pumpkolben (7) gegenüber der anderen, größeren Kolbenquerschnitt aufweisenden Pumpe (16) abgedichtet ist.

5. Einrichtung nach einem der vorhergehenden Ansprüche, dadurch gekennzeichnet, daß ein Ansaugventil (28) für die Kopflage durch ein nach Art einer Schiebersteuerung in Abhängigkeit von der Kolbenlage des zugehörigen Pumpkolbens (8) gesteuertes Ventil gebildet ist, das vorzugsweise durch eine in der Kolbenlaufbahn (21) liegende Verbindungsöffnung (30) des den Zylindermantel (29) der zweiten Pumpenkammer (23) durchsetzenden zweiten Ansaugkanales (26) und den zweiten Pumpkolben (8) gebildet ist, der die Verbindungsöffnung (30) gegen Ende seines Rückhubes zur zweiten Pumpenkammer (23) freigibt.

6. Einrichtung nach einem der vorhergehenden Ansprüche, dadurch gekennzeichnet, daß ein in der Austragverbindung zwischen mindestens einer Pumpe (15, 16) und dem Auslaßkanal (57) vorgesehenes Auslaßventil (11, 12) in Form eines elastisch geschlossenen Überdruckventiles oder dgl. einem die Kolbeneinheit (6) von der Pumpenkammer (22) für die Obenlage bis zu einer Auslaßöffnung (58) durchsetzenden Innenkanal (40) zugeordnet ist, in dem insbesondere zwei Auslaßventile (11, 12) hintereinander angeordnet sind.

7. Einrichtung nach einem der vorhergehenden Ansprüche, dadurch gekennzeichnet, daß ein Auslaßventil (11) für die Obenlage durch ein Schlauchventil gebildet ist, dessen elastisch aufweitbarer, insbesondere einen kugelförmigen Ventilkörper (42) umschließender Schlauchmantel (43) durch einen Längsabschnitt des Mantels der Kolbenstange (9) des zugehörigen ersten Pumpkolbens (7) gebildet ist.

8. Einrichtung nach einem der vorhergehenden Ansprüche, gekennzeichnet durch ein Auslaßventil (12), das einen gewölbten, selbstfedernden Ventilkörper (44) aufweist, der mit einem vorzugsweise ringförmigen Ventilsitz (45) zusammenarbeitet und in dem den Ventilsitz (45) umgebenden Bereich (46) einem das Ventil öffnenden Mediendruck ausgesetzt ist.

9. Einrichtung nach einem der Ansprüche 6 bis 8, dadurch gekennzeichnet, daß der Innenkanal (40) über mindestens einen Seitenkanal (47) an die Pumpenkammer (23) für die Kopflage angeschlossen ist und daß vorzugsweise das zugehörige Auslaßventil (12) einen ringförmig an dem Ventilsitz (45) etwa axial federnd anliegenden, vom Innenkanal (40) durchsetzten und diesen gegenüber dem ihn umgebenden Seitenkanal (47) abtrennenden Ventilkörper (44) aufweist.

10. Einrichtung nach Anspruch 8 oder 9, dadurch gekennzeichnet, daß der Ventilkörper (44) als etwa kugelkalottenförmiger Hohlkörper und/oder einteilig mit einer den zugehörigen Abschnitt des Innenkanales (40) bildenden Kolbenstange (9) ausgebildet ist.

11. Einrichtung nach Anspruch 9 oder 10, dadurch gekennzeichnet, daß die Kolbenstange (9) des Pumpkolbens (7) für die Obenlage in eine vom Seitenkanal (47) durchsetzte Endmuffe (41) der Kolbenstange (10) des Pumpkolbens (8) für die Kopflage eingesetzt ist, welche den Ventilkörper (44) des Auslaßventiles (12) für die Kopflage mit Abstand umgibt und vorzugsweise im Bereich des zugehörigen Ventilsitzes (45) in den gemeinsamen Auslaßkanal (57) übergeht.

12. Einrichtung nach einem der Ansprüche 2 bis 11, dadurch gekennzeichnet, daß mindestens einer der Pumpkolben (7, 8) für die Obenlage und für die Kopflage entgegengesetzt gerichtete Kolbenlippen (32, 33, 34, 35) für die Anlage an der zugehörigen Kolbenlaufbahn (20, 21) aufweist.

13. Einrichtung nach einem der Ansprüche 2 bis 12, dadurch gekennzeichnet, daß ein zwischen dem äußeren Ende der Kolbeneinheit (6) und einer für deren Durchführung in einem äußeren Zylinderdeckel (49) vorgesehenen Durchgangsöffnung (14) liegender, vom Innern der Einrichtung (1) nach außen führender, als Belüftungskanal (13) ausgebildeter Spalt wenigstens am Ende des Pumphubes von einem Sperrglied (52) geschlossen ist, wobei vorzugsweise das Sperrglied (52) außerhalb des Zylinderdeckels (4) an der äußeren Kolbenstange (10) des Pumpkolbens (8) für die Kopflage einen Sperrkonus (53) oder dgl. aufweist, der am Ende des Pumphubes schließend an der äußeren Ringbegrenzung (54) der Durchführungsöffnung (14) anliegt.

## Claims

1. Manually operated delivery apparatus with a pump for discharging media from a storage vessel or the like in a normal upright position and also in an opposite inverted position of the apparatus, characterized in that two pumps (15, 16) are provided, whereof one is constructed for operating in the normal upright position and the other for operating in the inverted position and that both pumps (15, 16) can be connected to the same storage vessel by means of suction ports (25, 26), as well as feeding into the same outlet passage (57), but with reciprocal bypassing.

2. Apparatus according to claim 1, characterized in that in the manner of a thrust piston pump, it has a cylinder (18, 19) as well as a piston unit (6) displaceable therein with two separate pump pistons (7, 8) for defining two separate pump chambers (22, 23) of the two pumps (15, 16), whereof one is connected on the inlet side to a first suction port (25) for the normal upright position and the other is connected to a second suction port (26) leading to a head area (31) surrounding the cylinder (18, 19).

3. Apparatus according to claims 1 or 2, characterized in that the pumps (15, 16) are successively arranged, in particular with the same axis (5), and that preferably both pump pistons (7, 8) are provided on a common piston unit (6), as well as in fixed manner with respect to the latter in one stroke direction (arrow 17), with a fixed reciprocal spacing.

4. Apparatus according to one of the preceding claims, characterized in that in the associated position of the delivery apparatus (1), the pump chamber (22, 23) is located at the bottom and that preferably the pump (15) at the front in the direction (arrow 17) of the pump stroke is sealed at its rear end exclusively by the associated pump piston (7) relative to the other pump (16) having a larger piston cross-section.

5. Apparatus according to one of the preceding claims, characterized in that the suction valve (28) for the inverted position is formed by a valve controlled in the manner of a slide control as a function of the position of the associated pump piston (8), which is preferably formed by a connecting opening (30) of the second suction port (26) traversing the cylinder jacket (29) of the second pump chamber (23) and located in the piston path (21) and the second pump piston (8), which frees the connecting opening (30) towards the end of its return stroke to the second pump chamber (23).

6. Apparatus according to one of the preceding claims, characterized in that an outlet valve (11, 12) located in the discharge connection between at least one pump (15, 16) and the outlet passage (57) in the form of an elastically closed overpressure valve or the like is associated with an inner passage (40) traversing the piston unit (6) from the pump chamber (22) for the normal upright position to an outlet port (58) and in which are in particular successively arranged two outlet valves (11, 12).

7. Apparatus according to one of the preceding claims, characterized in that an outlet valve (11) for the normal upright position is formed by a tube valve, whose elastically widenable tube jacket (43), more particularly surrounding a spherical valve body (42) is formed by a longitudinal portion of the jacket of the piston rod (9) of the associated first pump piston (7).

8. Apparatus according to one of the preceding claims, characterized by an outlet valve (12), which has a curved, self-resilient valve body (44), which cooperates with a preferably circular valve seat (45) and is in the area (46) surrounding valve seat (45) is exposed to the valveopening medium pressure.

9. Apparatus according to one of the claims 6 to 8, characterized in that the inner passage (40) is connected via at least one side passage (47) to the pump chamber (23) for the inverted position and that preferably the associated outlet valve (12) has a circular valve body (44) approximately axially resiliently engaging on the valve seat (45), traversed by the inner passage (40) and separating the latter with respect to its surrounding side channel (47).

10. Apparatus according to claims 8 or 9, characterized in that the valve body (44) is constructed as an approximately spherical segmental hollow body and/or in one piece with a piston rod (9) forming the associated portion of the inner passage (40).

11. Apparatus according to claims 9 or 10, characterized in that the piston rod (9) of the pump piston (7) for the normal upright position is inserted in an end socket (41), traversed by the side passage (47), of the piston rod (10) of pump piston (8) for the inverted position, which spacedly surrounds the valve body (44) of the outlet valve (12) for the inverted position and preferably passes in the vicinity of the associated valve seat (45) into the common outlet passage (57).

12. Apparatus according to one of the claims 2 to 11, characterized in that at least one of the pump pistons (7, 8) for the normal upright position and for the inverted position has oppositely directed piston lips (32, 33, 34, 35) for engaging on the associated piston path (20, 21).

13. Apparatus according to one of the claims 2 to 12, characterized in that an outwardly leading gap formed as a ventilation passage (13) located between the outer end of the piston units (6) and a passage opening (14) provided for its passage in an outer cylinder cover (49) is closed by a closing member (52) at least at the end of the pump stroke and preferably the closing member (52) is provided outside the cylinder cover (4) on the outer piston rod (10) of the pump piston (8) for the inverted position with a closing cone (53) or the like, which, closing at the end of the pump stroke, engages on the outer ring boundary (54) of the passage opening (14).

**Revendications**

1. Dispositif distributeur à actionnement manuel, muni d'une pompe pour distribuer des fluides à partir d'un réceptacle d'accumulation ou réceptacle similaire, en position dressée verticalement et en position tête en bas du dispositif, opposée à la position précitée, caractérisé par la présence de deux pompes (15, 16), dont l'une est réalisée pour fonctionner dans la position dressée verticalement et l'autre est conçue pour fonctionner dans la position tête en bas; et par le fait que les deux pompes (15, 16) peuvent être reliées au même réceptacle d'accumulation, par l'intermédiaire de canaux d'aspiration (25, 26), et refoulent dans le même canal de sortie (57), toutefois avec contournement réciproque.

2. Dispositif selon la revendication 1, caractérisé par le fait qu'il comprend, à la manière d'une pompe à piston refouleur, un cylindre (18, 19) ainsi qu'un ensemble plongeur (6) qui peut coulisser dans ce dernier avec des pistons de pompage distincts (7, 8) pour la délimitation de deux chambres de pompage séparées (22, 23) des deux pompes (15, 16), dont l'une est raccordée, côté entrée, à un premier canal d'aspiration (25) pour la position dressée verticalement, et l'autre est raccordée, pour la position tête en bas, à un second canal d'aspiration (26), réuni à une chambre frontale (31) qui entoure le cylindre (18, 19).

3. Dispositif selon la revendication 1 ou 2, caractérisé par le fait que les pompes (15, 16) sont agencées en succession, notamment avec des axes qui coincident (5); et par le fait que les deux pistons de pompage (7, 8) sont préférentiellement prévus sur un ensemble plongeur commun (6) et sont disposés à demeure par rapport à celui-ci, dans une direction de course (flèche 17), avec un espacement mutuel fixe.

4. Dispositif selon l'une des revendications précédentes, caractérisé par le fait que la chambre de pompage considérée (22, 23) se trouve en partie basse dans la position associée du dispositif distributeur (1); et par le fait que la pompe (15), dispose en amont par rapport à la direction (flèche 17) de la course de pompage, est de préférence rendue étanche à son extrémité postérieure, exclusivement par l'intermédiaire du piston de pompage associé (7), vis-à-vis de l'autre pompe (16), présentant une plus grande section de piston.

5. Dispositif selon l'une des revendications précédentes, caractérisé par le fait qu'une valve d'aspiration (28), pour la position tête en bas, est formée par une valve du type à commande par tiroir qui est pilotée en fonction de la position du piston de pompage associé (8), et est de préférence matérialisée par un orifice de liaison (30), pratiqué sur le trajet de coulissement (21) du piston dans le second canal d'aspiration (26) traversant l'enveloppe cylindrique (29) de la seconde chambre de pompage (23), ainsi que par le second piston de pompage (8) qui dégage l'orifice de liaison (30) vers la fin de sa course de retour en direction de la seconde chambre de pompage (23).

6. Dispositif selon l'une des revendications précédentes, caractérisé par le fait qu'une soupape de sortie (11, 12), ayant la forme d'une soupape de surpression ou soupape analogue, fermée élastiquement, prévue dans la liaison entre au moins une des pompes (15, 16) et le canal de sortie (57), est associée à un canal interne (40) qui traverse l'ensemble plongeur (6) de la chambre de pompage (22) pour la position dressée verticalement, jusqu'à un orifice de sortie (58), et dans lequel deux soupapes de sortie (11, 12) sont notamment agencées en succession.

7. Dispositif selon l'une des revendications précédentes, caractérisé par le fait qu'une soupape de sortie (11), pour la position dressée verticalement, est formée par une soupape à gaine souple, dont l'enveloppe (43) est dilatable élastiquement et entoure notamment un obturateur sphérique (42), en étant formée par un tronçon longitudinal de l'enveloppe de la tige (9) du premier piston de pompage associé (7).

8. Dispositif selon l'une des revendications précédentes, caractérisé par une soupape de sortie (12) qui présente un obturateur bombé (44) élastique, coopérant avec un siège (45) de préférence annulaire, et dans laquelle la région (46) qui entoure le siège (45) est exposée à une pression de fluide ouvrant ladite soupape.

9. Dispositif selon l'une des revendications 6 à 8, caractérisé par le fait que le canal interne (40) est raccordé par l'intermédiaire d'au moins un canal latéral (47) à la chambre de pompage (23) pour la position tête en bas; et par le fait que la soupape de sortie associée (12) présente, de préférence, un obturateur (44), qui repose annulairement sur le siège (45), avec une sensible élasticité dans le sens axial, et est traversé par le canal interne (40), en séparant celui-ci du canal latéral (47) qui l'entoure.

10. Dispositif selon la revendication 8 ou 9, caractérisé par le fait que l'obturateur (44) est constitué par un corps creux sensiblement en forme de calotte sphérique, et/ou d'une seule pièce avec une tige (9) de piston, qui forme la région associée du canal interne (40).

11. Dispositif selon la revendication 9 ou 10, caractérisé par le fait que la tige (9) du piston de pompage (7) pour la position dressée verticalement, est engagée dans un manchon d'extrémité (41), traversé par le canal latéral (47) de la tige (10) du piston de pompage (8) pour la position tête en bas, qui entoure à distance l'obturateur (44) de la soupape de sortie (12) pour la position tête en bas et rejoint de préférence, au voisinage du siège associé (45), le canal de sortie commun (57).

12. Dispositif selon l'une des revendications 2 à 11, caractérisé par le fait qu'au moins l'un des pistons de pomage (7, 8) comporte des segments (32, 33; 34, 35) dirigés dans des sens opposés pour la position dressée verticalement et pour la position tête en bas, et destinés à s'appliquer contre le trajet associé (20, 21) de coulissement du piston.

13. Dispositif selon l'une des revendications 2 à 12, caractérisé par le fait qu'un interstice, réalisé sous la forme d'un canal d'évent (13), menant vers l'extérieur à partir de l'intérieur du dispositif (1) et intercalé entre l'extrémité externe de l'ensemble plongeur (6) et un orifice de passage (14) prévu, pour la traversée dudit ensemble, dans un couvercle cylindrique externe (49), est fermé par une pièce d'obturation (52), au moins à la fin de la course de pompage, la pièce d'obturation (52) comportant de préférence, à l'extérieur du couvercle cylindrique (4), sur la tige externe (10) du piston de pompage (8) pour la position tête en bas, un cône obturateur (53) ou élément similaire qui repose, à la fin de la course de pompage avec effet d'obturation, sur la délimitation annulaire externe (54) de l'orifice de passage (14).

Fig.2

Fig.1

Fig. 4

Fig. 3

EP 0 199 142 B1

Fig.6

Fig.5

Fig.7

Fig. 9

Fig. 8

Fig. 10

Fig.11